# EUROPÄISCHE PATENTSCHRIFT

(11) **EP 1 998 023 B1**
(45) Veröffentlichungstag und Bekanntmachung des Hinweises auf die Patenterteilung: **19.10.2011**
(21) Anmeldenummer: 08156330.6
(22) Anmeldetag: 16.05.2008
(51) Int. Cl.: F02B 39/00, F01D 25/12, F16C 37/00

(54) **Ladeeinrichtung**
Turbo compressor
Turbo compresseur

(30) Priorität: 30.05.2007 DE 102007025133
(43) Veröffentlichungstag der Anmeldung: 03.12.2008
(73) Patentinhaber: Bosch Mahle Turbo Systems GmbH & Co. KG, 70376 Stuttgart (DE)
(72) Erfinder: Rentz, Florian, 70193 Stuttgart (DE)
(74) Vertreter: BRP Renaud & Partner

(56) Entgegenhaltungen:
- EP-A- 1 752 636
- WO-A-01/29426
- DE-A1- 4 330 380
- DE-A1- 19 518 317
- US-A1- 2004 197 212

## Beschreibung

Die vorliegende Erfindung betrifft einen Abgasturbolader für ein Kraftfahrzeug.

Ein Turbolader, beispielsweise ein Abgasturbolader, dient im allgemeinen der Leistungssteigerung von Kolbenmotoren durch Erhöhung des Luftmengen- und Kraftstoffdurchsatzes pro Arbeitstakt. Bei nicht aufgeladenen Kolbenmotoren, sogenannten Saugmotoren, wird beim Ansaugen von Luft durch die Kolben ein Unterdruck im Ansaugtrakt erzeugt, der mit wachsender Drehzahl ansteigt und dadurch die Leistung des Motors begrenzt. Dem wirkt der Turbolader durch eine Erhöhung des Drucks im Ansaugtrakt des Motors entgegen, so dass während des Ansaugtaktes eine größere Menge Luft in den Zylinder gelangt als bei einem Saugmotor und dadurch mehr Sauerstoff zur Verbrennung einer entsprechend größeren Kraftstoffmenge zur Verfügung steht. Im Turbolader selbst ist eine drehbar gelagerte Welle angeordnet, welche einenends ein Verdichterrad und anderenends ein Turbinenrad aufweist. Durch die während des Betriebs des Turboladers extrem hohen Drehzahlen der Welle, weisen moderne Turboladergehäuse Kühlkanäle auf, die an einen Kühlkreislauf des Verbrennungsmotors angeschlossen sind und insbesondere eine thermische Belastung des Turboladers verringern. Die thermische Belastung besteht dabei insbesondere in einer sehr starken Erwärmung des Lagergehäuses durch die Restwärme auf der Turbinenseite, wodurch es zu einer Verkokung von Schmieröl kommen kann.

Der Kühlkanal ist dabei üblicherweise ringförmig um die Welle angeordnet und kommunizierend mit dem Kühlkreislauf des Verbrennungsmotors verbunden. Hergestellt wird ein derartiger Kühlkanal, indem während eines Gießvorganges des Turboladergehäuses an der Stelle des späteren Kühlkanals ein Kern, beispielsweise ein Salz- oder Wasser-Sandkern vorgesehen ist. Dieser wird nach dem Gießvorgang entfernt, so dass der freiwerdende Raum den Kühlkanal bildet. Hierbei ist jedoch darauf zu achten, dass aufgrund einer unvorhersehbaren Lunkerbildung ein Minimalabstand zu anderen Bauteilen beziehungsweise zu einem freien Rand des Turboladergehäuses nicht unterschritten wird, da es ansonsten zu einer ungewollten Leckage kommen kann. Ein großer Abstand zu den kühlenden Bauteilen, beispielsweise zu der Welle, vermindert jedoch die Kühlleistung und erhöht dadurch die Temperaturbelastung für den Turbolader.

Aus der WO 01/29426 A ist ein gattungsgemäßer Abgasturbolader bekannt, mit einer in einem Gehäuse gelagerten Welle, die einenends ein Turbinenrad und anderenends ein Verdichterrad trägt.

Die vorliegende Erfindung beschäftigt sich mit dem Problem, eine verbesserte Ausführungsform für einen Abgasturbolader anzugeben, bei welcher insbesondere eine verbesserte Kühlung des Abgasturboladers erreicht werden kann.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, den Kühlkanal als separates Bauteil auszubilden und in ein Gehäuse des Abgasturboladers zu integrieren. Hierbei wird der Kühlkanal vorzugsweise von einem Kühlkanalmantel aus einem metallischen Werkstoff begrenzt, welcher sich von einem metallischen Werkstoff des Gehäuses unterscheidet. Da der Kühlkanal nunmehr als separates Bauteil ausgebildet ist, spielen beim Gießen des Gehäuses des Abgasturboladers eventuell auftretenden Lunkerbildungen keine Rolle mehr, da diese eine Dichtheit des Kühlkanals nicht mehr beeinträchtigen können. Da die Dichtigkeit des Kühlkanals durch den separat hergestellten Kühlkanalmantel gewährleistet ist, kann der Kühlkanal selbst zudem deutlich näher an die zu kühlenden Komponenten beziehungsweise Bauteile des Abgasturboladers gelegt werden. Diese räumliche Nähe zwischen dem Kühlkanal einerseits und den zu kühlenden Komponenten beziehungsweise Bauteile des Abgasturboladers andererseits verbessert die Wärmeübertragung, wodurch sich die Temperaturbelastung des Abgasturboladers insgesamt deutlich absenkt. So ist beispielsweise denkbar, dass der erfindungsgemäß ausgebildete Kühlkanal eng benachbart zu einem Lager der Welle des Turboladers angeordnet ist und dadurch eine Verkokung des Schmieröls aufgrund der hohen auf der Abgasseite auftretenden Temperaturen zuverlässig vermieden werden kann.

Zweckmäßig ist der Kühlkanal aus Stahl, insbesondere aus Edelstahl ausgebildet. Stahl bietet zum einen hervorragende Wärmeleiteigenschaften, so dass eine hohe Wärmeübertragung gewährleistet ist und zum anderen bildet ein aus Stahl ausgebildeter Kühlkanalmantel eine hohe Gewähr für die Dichtigkeit des Kühlkanals.

Bei einer weiteren vorteilhaften Ausführungsform der erfindungsgemäßen Lösung steht der Kühlkanalmantel mit einem Teil seiner Außenseite in direktem Kontakt mit einem Ölkanal der Ölschmierung der Welle oder verläuft zumindest eng benachbart zu diesem Ölkanal im Gehäuse. Ein direkter Kontakt zwischen dem Kühlkanalmantel einerseits und einem Ölkanal mit für die Schmierung der Welle erforderlichen Ö1 andererseits garantiert dabei eine hervorragende Wärmeübertragung zwischen einem im Kühlkanal fließenden Kühlmedium und dem Öl zur Schmierung der Welle, wodurch eine Verkokung des Öls zuverlässig vermieden werden kann. Insbesondere ist hierbei auch denkbar, dass eine Außenseite des Kühlkanalmantels als direkte Lagerfläche für die Welle ausgebildet ist, wodurch eine besonders effektive Kühlung der Lagerung erzielt werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen. Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Längsschnitt durch einen erfindungsgemäße Ab- gasturbolader mit einem Kühlkanal,
- Fig. 2: eine Ansicht auf einen geschlossen ausgeführten Kühlkanal,
- Fig. 3: eine Darstellung wie in Fig. 2, jedoch bei einem of- fenen Kühlkanal.

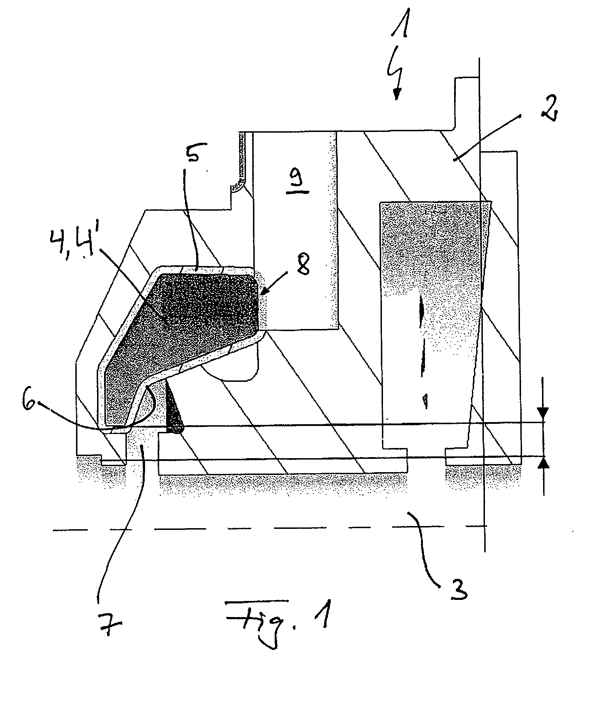

Entsprechend Fig. 1 weist ein erfindungsgemäßer Abgasturbolader 1 für ein Kraftfahrzeug, eine in einem Gehäuse 2 gelagerte Welle 3 auf, die einenends ein nicht gezeigtes Turbinenrad und anderenends ein ebenfalls nicht gezeigtes Verdichterrad trägt. Die Welle 3 erreicht dabei im Betriebszustand des Abgasturboladers 1 sehr hohe Drehzahlen und steht darüber hinaus mit einem Abgasstrom eines Verbrennungsmotors in Kontakt, wodurch hohe Temperaturbelastungen auftreten. Um die hohen Drehzahlen der Welle 3 auch über längere Zeit problemlos aufnehmen zu können, ist die Welle 3 üblicherweise in einem sogenannten hydrodynamischen Gleitlager gelagert. Denkbar ist aber auch eine Lagerung der Welle 3 am Gehäuse 2 über sogenannte und nicht dargestellte Lagerringe. Um eine möglichst reibungsarme Lagerung zu erreichen, werden die Lager üblicherweise geschmiert, insbesondere einem permanenten Ölstrom ausgesetzt. Aufgrund der vorher genannten hohen Temperaturbelastungen, kann es dabei zu einer Verkokung des Öls kommen, wodurch dieses seine Schmierwirkung verliert.

Um die Temperaturbelastung des Abgasturboladers 1 insgesamt auf einem erträglichen Niveau halten zu können, und um insbesondere eine Verkokung des zur Schmierung der Welle 3 verwendeten Öls wirkungsvoll vermeiden zu können, weist der erfindungsgemäße Abgasturbolader 1 einen in dem Gehäuse 2 angeordneten Kühlkanal 4 auf, welcher insbesondere ringförmig um die Welle 3 verläuft. Dabei weist der Kühlkanal 4 einen Kühlkanalmantel 5 aus einem metallischen Werkstoff, beispielsweise aus Stahl auf, welcher sich von einem metallischen Werkstoff des Gehäuses 2 unterscheidet. Als Material für das Gehäuse 2 des Abgasturboladers 1 kommt beispielsweise Aluminiumguss aufgrund seiner guten Wärmeleiteigenschaften und seines geringen Gewichtes in Betracht.

Der Kühlkanal 4, welcher von dem Kühlkanalmantel 5 begrenzt wird, bildet somit eine separate Baugruppe, welche bei der Herstellung des Gehäuses 2 des Abgasturboladers 1 in einer Gießform für das Gehäuse 2 angeordnet und in einem späteren Fertigungsschritt umgossen wird. Im Vergleich zu einem lediglich als Hohlraum im Gehäuse 2 ausgebildeten Kühlkanal 4 bietet dies den großen Vorteil, dass der Kühlkanal 4 deutlich dichter an die zu kühlenden Komponenten, beispielsweise an ein Lager der Welle 3 gelegt werden kann, da der separat hergestellte Kühlkanalmantel 5 die Dichtigkeit des Kühlkanales 4 gewährleistet. Bei einem lediglich als Hohlraum im Gehäuse 2 ausgebildeten Kühlkanal 4 muss ein Abstand zwischen dem Kühlkanal 4 und dem zu kühlenden Bauteil, beispielsweise dem Lager der Welle 3, deutlich größer gewählt werden, da eine Herstellung des Kühlkanales 4 als Hohlraum oftmals von einer Lunkerbildung begleitet wird, welche einerseits zu einer Leckage des späteren Kühlkanales 4 führen kann und andererseits zur ausreichenden Stabilisierung des Kühlkanales 4 beziehungsweise des Gehäuses 2 einen größeren Mindestabstand zu benachbarten, insbesondere zu kühlenden, Bauteilen benötigt.

Wie der Fig. 1 weiter zu entnehmen ist, steht der Kühlkanalmantel 5 mit einem Teil seiner Außenseite 6 in direktem Kontakt mit einem Ölkanal 7 der Ölschmierung der Welle 3 und ermöglicht dadurch eine besonders gute Wärmeübertragung zwischen dem im Kühlkanal 4 strömenden Kühlmedium und dem im Ölkanal 7 zu kühlenden Öl. Ebenfalls möglich wäre eine sehr eng benachbart zu dem Ölkanal 7 gewählte Anordnung des Kühlkanals 4, wodurch ebenfalls ein hoher Wärmetausch erreicht werden kann.

Insbesondere bei einem aus Edelstahl ausgebildeten Kühlkanalmantel 5 ist darüber hinaus vorstellbar, dass der Kühlkanalmantel 5 mit einem Teil seiner Außenseite 6 in direktem Kontakt mit einem Lager, insbesondere mit einem nicht gezeigten Lagerring, der Welle 3 oder mit der Welle 3 selbst steht, wodurch eine direkte Kühlung des Lagers der Welle 3 möglich ist. In diesem Falle hätte der Kühlkanalmantel 5 sowohl die Funktion den Kühlkanal 4 zu begrenzen als auch gleichzeitig eine Lagerfläche für einen Lagerring beziehungsweise für die Welle 3 bereitzustellen.

Durch den erfindungsgemäß als separates Bauteil ausgebildeten Kühlkanal 4 ist es möglich, den Ölkanal 7 nur durch die Wandstärke des Kühlkanalmantels 5 vom Kühlkanal 4 zu trennen, wodurch im Vergleich zu bisher in der Gussform separat vergossenen Hohlräumen für den Kühlkanal 4 und den Ölkanal 7 ein deutlich geringerer Abstand zwischen Kühlmedium und zu kühlendem Medium erreicht und damit die Kühlung deutlich verbessert werden kann.

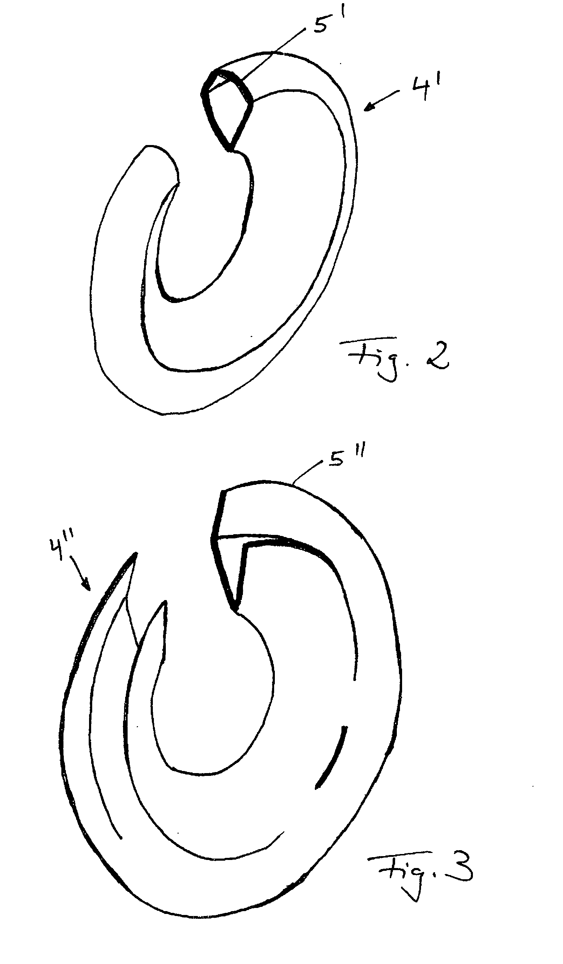

Prinzipiell ist es dabei möglich, dass der Kühlkanal 4 entweder als geschlossener Kühlkanal 4' ausgebildet ist (vgl. Fig. 2), wobei der Kühlkanalmantel 5' den Kühlkanal 4' vollständig umschließt oder dass der Kühlkanal 4 als offener Kühlkanal 4" ausgebildet ist (vgl. Fig. 3), wobei der Kühlkanalmantel 5" in diesem Fall den Kühlkanal 4" lediglich bereichsweise umschließt.

Ein geschlossener Kühlkanal 4' wird dabei zunächst separat gefertigt und in diesem vorgefertigten Zustand in eine Gießform des Gehäuses 2 eingebracht. In einem darauf folgenden Arbeitsschritt wird nun das Gehäuse 2 des Abgasturboladers 1 um den, den Kühlkanal 4' begrenzenden Kühlkanalmantel 5' herumgegossen. Um den Kühlkanal 4' mit einem Kühlmittelkreislauf des Verbrennungsmotors verbinden zu können, wird anschließend eine Verbindung zwischen dem Kühlkanal 4' und dem Kühlmittelkreislauf, beispielsweise durch eine Bohrung, geschaffen.

Wird der Kühlkanal 4 dagegen als offener Kühlkanal 4" ausgebildet, so wird der Kühlkanalmantel 5" zum Gießen des Gehäuses 2 des Abgasturboladers 1 in einen Wasser-Sandkern eingebettet, welcher nach dem Gießen des Gehäuses 2 wieder entfernt wird. Dabei schafft das Entfernen des Wasser-Sandkerns eine Öffnung, welche den Kühlkanal 4" günstigerweise mit dem Kühlmittelkreislauf verbindet.

In Fig. 1 ist ein geschlossener Kühlkanal 4' gezeigt, welcher in einem Bereich 8 angebohrt ist und über den Bereich 8 mit einer Verbindungsbohrung 9 mit einem nicht gezeigten Kühlmittelkreislauf verbunden ist.

Durch den erfindungsgemäßen Kühlkanal 4, welcher im Vergleich zu einem herkömmlichen Kühlkanal deutlich dichter zu dem zu kühlenden Bauteil, beispielsweise dem Ölkanal 7 beziehungsweise der Welle 3 angeordnet werden kann, ist eine deutlich verbesserte Kühlung des Abgasturboladers 1 möglich. Insbesondere kann durch die erfindungsgemäße Ausgestaltung des Kühlkanals 4 mit einem separat hergestellten und den Kühlkanal 4 begrenzenden Kühlkanalmantel 5 die insgesamt auf das Gehäuse 2 wirkende thermische Belastung reduziert und eine Verkokung von die Welle 3 schmierendem Öl vermieden werden. Auch kann durch den erfindungsgemäß ausgebildeten Kühlkanal 4 die Prozesssicherheit bei der Herstellung des Gehäuses 2 gesteigert werden, da ein Verschwimmen von bisher getrennt zueinander angeordneten Kernen des Kühlkanals 4 und des Ölkanals 7 vermieden werden kann.

## Patentansprüche

1. Abgasturbolader (1) für ein Kraftfahrzeug,
- mit einer in einem Gehäuse (2) gelagerten Welle (3), die einenends ein Turbinenrad und anderenends ein Verdichterrad trägt,
- mit einem in dem Gehäuse (2) angeordneten Kühlkanal (4), insbesondere einem ringförmig um die Welle (3) verlaufenden Kühlkanal (4) zur Kühlung einer Lagerung der Welle (3),
**dadurch gekennzeichnet,**
**dass** der Kühlkanal (4) einen Kühlkanalmantel (5) aus einem metallischen Werkstoff aufweist, welcher sich von einem metallischen Werkstoff des Gehäuses (2) unterscheidet.

2. Abgasturbolader nach Anspruch 1,
**dadurch gekennzeichnet,**
**dass** der Kühlkanalmantel (5) aus Stahl, insbesondere aus Edelstahl, ausgebildet ist.

3. Abgasturbolader nach Anspruch 1 oder 2,
**dadurch gekennzeichnet,**
**dass** das Gehäuse (2) des Abgasturboladers (1) aus Metallguss, insbesondere aus Aluminiumguss hergestellt ist.

4. Abgasturbolader nach einem der Ansprüche 1 bis 3,
**dadurch gekennzeichnet,**
**dass** der Kühlkanalmantel (5) mit einem Teil seiner Außenseite (6) in direktem Kontakt mit einem Ölkanal (7) der Ölschmierung der Welle (3) steht oder zumindest eng benachbart zu diesem Ölkanal (7) im Gehäuse (2) verläuft.

5. Abgasturbolader nach einem der Ansprüche 1 bis 4,
**dadurch gekennzeichnet,**
**dass** der Kühlkanalmantel (5) mit einem Teil seiner Außenseite (6) in direktem Kontakt mit einem Lagerring der Welle (3) oder mit der Welle (3) selbst steht.

6. Abgasturbolader nach einem der Ansprüche 1 bis 5,
**dadurch gekennzeichnet,**
**dass** der Kühlkanal (4) als geschlossener Kühlkanal (4') ausgebildet ist, wobei der Kühlkanalmantel (5') den Kühlkanals (4') vollständig umschließt.

7. Abgasturbolader nach einem der Ansprüche 1 bis 5,
**dadurch gekennzeichnet,**
**dass** der Kühlkanal (4) als offener Kühlkanal (4") ausgebildet ist, wobei der Kühlkanalmantel (5") den Kühlkanal (4") lediglich teilweise umschließt.

8. Verfahren zur Herstellung eines Gehäuses (2) eines Abgasturboladers (1) mit einem darin angeordneten Kühlkanal (4), insbesondere eines Gehäuses (2) eines Abgasturboladers (1) nach einem der Ansprüche 1 bis 6,
**dadurch gekennzeichnet,**
**dass** der Kühlkanalmantel (5) als vorgefertigte Baugruppe in einer Gießform des Gehäuses (2) angeordnet wird und das Gehäuse des Abgasturboladers (1 ) in einem darauf folgenden Arbeitsschritt um den, den Kühlkanal (4) begrenzenden Kühlkanalmantel (5) herumgegossen wird.

9. Verfahren nach Anspruch 8,
**dadurch gekennzeichnet,**
- **dass** der Kühlkanal (4) als geschlossener Kühlkanal (4') ausgebildet ist und nach dem Gießen des Gehäuses (2) des Abgasturboladers (1) der Kühlkanalmantel (5') angebohrt wird, um den Kühlkanal (4') mit einem Kühlmittelkreislauf zu verbinden, oder
- **dass** der Kühlkanal (4) als offener Kühlkanal (4") ausgebildet ist und der Kühlkanalmantel (5") zum Gießen des Gehäuses (2) des Abgasturboladers (1) in einen Wasser-Sandkern eingebettet wird, der nach dem Gießen des Gehäuses entfernt wird und eine Verbindung zu einem Kühlmittelkreislauf schafft.

## Claims

1. An exhaust gas turbocharger (1) for a motor vehicle,
- with a shaft (3) mounted in a housing (2), which on one end carries a turbine wheel and on the other end a compressor wheel,
- with a cooling channel (4) arranged in the housing (2), particularly a cooling channel (4) annularly running about the shaft (3) for cooling a bearing of the shaft (3),
**characterized in that** the cooling channel (4) comprises a cooling channel jacket (5) of a metallic material, which differs from a metallic material of the housing (2).

2. The exhaust gas turbocharger according to Claim 1, **characterized in that** the cooling channel jacket (5) is formed of steel, particularly of stainless steel.

3. The exhaust gas turbocharger according to Claim 1 or 2, **characterized in that** the housing (2) of the exhaust gas turbocharger (1) is produced from cast metal, particularly from cast aluminium.

4. The exhaust gas turbocharger according to any one of the Claims 1 to 3, **characterized in that** the cooling channel jacket (5) with a part of its outside (6) is in direct contact with an oil channel (7) of the oil lubrication of the shaft (3) or at least runs in the housing (2) closely neighbouring this oil channel (7).

5. The exhaust gas turbocharger according to any one of the Claims 1 to 4, **characterized in that** the cooling channel jacket (5) with a part of its outside (6) is in direct contact with a bearing race of the shaft (3) or with the shaft (3) itself.

6. The exhaust gas turbocharger according to any one of the Claims 1 to 5, **characterized in that** the cooling channel (4) is designed as a closed cooling channel (4'), wherein the cooling channel jacket (5') completely encloses the cooling channel (4').

7. The exhaust gas turbocharger according to any one of the Claims 1 to 5, **characterized in that** the cooling channel (4) is designed as open cooling channel (4"), wherein the cooling channel jacket (5") encloses the cooling channel (4") merely partially.

8. A method for producing a housing (2) of an exhaust gas turbocharger (1) with a cooling channel (4) arranged therein, particularly of a housing (2) of an exhaust gas turbocharger (1) according to any one of the Claims 1 to 6, **characterized in that** the cooling channel jacket (5) is arranged as prefabricated assembly in a casting mould of the housing (2) and the housing of the exhaust gas turbocharger (1) is cast round about the cooling channel jacket (5) delimiting the cooling channel (4) in a subsequent operation.

9. The method according to Claim 8, **characterized**
- **in that** the cooling channel (4) is designed as closed cooling channel (4') and after the casting of the housing (2) of the exhaust gas turbocharger (1) the cooling channel jacket (5') is drilled into in order to connect the cooling channel (4') with a coolant circuit, or
- **in that** the cooling channel (4) is designed as open cooling channel (4") and the cooling channel jacket (5") for casting the housing (2) of the exhaust gas turbocharger (1) is embedded in a water-sand core which is removed after the casting of the housing and creates a connection to a coolant circuit.

## Revendications

1. Turbocompresseur à gaz d'échappement (1) pour un véhicule automobile, comprenant
- un arbre (3) monté dans un carter (2), qui porte sur une extrémité une roue de turbine et sur l'autre extrémité une roue de compresseur,
- un canal de refroidissement (4) disposé dans le carter (2), en particulier un canal de refroidissement (4) agencé en forme de bague autour de l'arbre (3) pour le refroidissement d'une fixation de l'arbre (3),
**caractérisé en ce que**
le canal de refroidissement (4) présente une enveloppe de canal de refroidissement (5) à base d'un matériau métallique, qui se différencie d'un matériau métallique du carter (2).

2. Turbocompresseur à gaz d'échappement selon la revendication 1,
**caractérisé en ce que**
l'enveloppe de canal de refroidissement (5) est conçue en acier, en particulier en acier Inox.

3. Turbocompresseur à gaz d'échappement selon la revendication 1 ou 2,
**caractérisé en ce que**
le carter (2) du turbocompresseur à gaz d'échappement (1) est en fonte métallique, en particulier en fonte d'aluminium.

4. Turbocompresseur à gaz d'échappement selon l'une quelconque des revendications 1 à 3,
**caractérisé en ce que**
l'enveloppe de canal de refroidissement (5) avec une partie de son côté extérieur (6) est en contact direct avec un canal d'huile (7) du graissage d'huile de
l'arbre (3) ou est agencée tout du moins à proximité immédiate de ce canal d'huile (7) dans le carter (2).

5. Turbocompresseur à gaz d'échappement selon l'une quelconque des revendications 1 à 4,
**caractérisé en ce que**
l'enveloppe de canal de refroidissement (5) avec une partie de son côté extérieur (6) est en contact direct avec une bague de palier de l'arbre (3) ou avec l'arbre (3) même.

6. Turbocompresseur à gaz d'échappement selon l'une quelconque des revendications 1 à 5,
**caractérisé en ce que**
le canal de refroidissement (4) est conçu comme canal de refroidissement (4') fermé, l'enveloppe de canal de refroidissement (5') entourant complètement le canal de refroidissement (4').

7. Turbocompresseur à gaz d'échappement selon l'une quelconque des revendications 1 à 5,
**caractérisé en ce que**
le canal de refroidissement (4) est conçu comme canal de refroidissement (4") ouvert, l'enveloppe de canal de refroidissement (5") entourant uniquement partiellement le canal de refroidissement (4").

8. Procédé pour fabriquer un carter (2) d'un turbocompresseur à gaz d'échappement (1) avec un canal de refroidissement (4) disposé à l'intérieur, en particulier d'un carter (2) d'un turbocompresseur à gaz d'échappement (1) selon l'une quelconque des revendications 1 à 6,
**caractérisé en ce que**
l'enveloppe de canal de refroidissement (5) est disposée sous forme de module préfabriqué dans un moule du carter (2) et le carter du turbocompresseur à
gaz d'échappement (1) est moulé dans une étape de travail consécutive autour de l'enveloppe de canal de refroidissement (5) délimitant le canal de refroidissement (4).

9. Procédé selon la revendication 8,
**caractérisé**
- **en ce que** le canal de refroidissement (4) est conçu comme canal de refroidissement (4') fermé et l'enveloppe de canal de refroidissement (5') est percée après la coulée du carter (2) du turbocompresseur à gaz d'échappement (1), afin de relier le canal de refroidissement (4') à un circuit de réfrigérant, ou
- **en ce que** le canal de refroidissement (4) est conçu comme canal de refroidissement (4") ouvert et l'enveloppe de canal de refroidissement (5") est insérée dans un noyau à eau et sable pour la coulée du carter (2) du turbocompresseur à gaz d'échappement (1), lequel noyau est enlevé après la coulée du carter et crée une liaison avec un circuit de réfrigérant.
